# EUROPÄISCHE PATENTANMELDUNG

(11) **EP 1 584 438 A1**
(43) Veröffentlichungstag der Anmeldung: **12.10.2005**
(21) Anmeldenummer: 05102543.5
(22) Anmeldetag: 31.03.2005
(51) Int. Cl.: B28D 1/04, B28D 1/12

(54) **Schneidsegment für Werkzeuge**

(30) Priorität: 05.04.2004 DE 102004016819
(71) Anmelder: HILTI Aktiengesellschaft, 9494 Schaan (LI)
(72) Erfinder: Weber, Christoph, 6345, Neuheim (CH); Egg, Roland, 6830, Rankweil (AT)
(74) Vertreter: Wildi, Roland

(57) **Zusammenfassung**

Die Erfindung betrifft ein Schneidsegment (10) für Werkzeuge, wie Bohrkronen, Sägeblätter, Trennscheiben, mit einer Basis (11) zum Anbringen des Schneidsegmentes (10) an ein Werkzeug und mit einer, der Basis (11) gegenüberliegenden Schneidfläche (20). Zur Verbesserung eines derartigen Schneidsegmentes (10) weist die Schneidfläche (20) wenigstens zwei Flächenabschnitte (21, 22, 23, 24) auf, die stufenförmig zueinander versetzt sind.

## Beschreibung

Die vorliegende Erfindung betrifft ein Schneidsegment für Werkzeuge, wie z. B. für Kernbohrkronen, Kreissägeblätter, Trennscheiben o. ä., der im Oberbegriff des Patentanspruchs 1 genannten Art. Derartige Schneidsegmente sind dabei an der oder den Schneidkanten des Werkzeugs angeordnet.

Aus der EP 1 236 553 A1 sind gattungsgemässe Schneidsegmente bekannt, die an der Schneidkante einer zylindrischen Bohrkrone angeordnet sind. Die Schneidsegmente weisen jeweils eine Basisfläche auf, über welche diese an der Schneidkante der Bohrkrone festgelegt sind. Die Schneidsegmente bilden ferner Schneidflächen aus, die gegenüber der Basisfläche geneigt sind.

Von Nachteil bei derartigen Schneidsegmenten ist, dass sich die Form der Schneidflächen nach längerem Betrieb verändert, so dass die Schnittleistung abnimmt.

Aus der EP 0 204 674 ist ein Schneidwerkzeug in Form eines Kreissägeblattes bekannt an dessen Peripherie eine Vielzahl von Schneidsegmenten angeordnet sind. Die Schneidsegmente weisen dabei jeweils eine Schneidfläche auf, die im Wesentlichen parallel zu einer Basis verläuft, an der die Schneidsegmente an dem Kreissägeblatt festgelegt sind.

Nachteilig ist auch hier, dass sich die Form der Schneidflächen nach längerem Betrieb verändert, so dass die Schnittleistung abnimmt.

Die Aufgabe der vorliegenden Erfindung liegt daher darin, ein Schneidsegment zu entwickeln, das die genannten Nachteile vermeidet und gute Schneideeigenschaften aufweist.

Diese Aufgabe wird erfindungsgemäss durch die in Anspruch 1 genannten Massnahmen erreicht. Demnach bildet die Schneidfläche wenigstens zwei Flächenabschnitte aus, die stufenförmig zueinander versetzt sind. Diese abgestufte Form bleibt zumindest in abgeschwächter Form während der gesamten Lebensdauer des Schneidsegmentes erhalten. Gleichzeitig weisen die erfindungsgmässen Schneidsegmente über ihre Lebensdauer eine im Wesentlichen gleich bleibend hohe Schnittleistung auf.

In einer vorteilhaften Ausbildung der Erfindung weist die Schneidfläche mehrere Flächenabschnitte auf, die entlang einer Längsachse bzw. einer Erstreckungsrichtung des Schneidsegmentes treppenartig hintereinander liegend versetzt angeordnet sind. Unter treppenartig wird in diesem Zusammenhang verstanden, dass mehr als zwei Stufen ausgebildet sind. Die Längsachse verläuft bei einem an einem Werkzeug angeordneten Schneidsegment vorzugsweise in Schnittrichtung bzw. in der Bewegungsbahn oder -ebene. Von Vorteil bei dieser Massnahme ist, dass das ansonsten übliche Anschärfen eines mit Schneidsegmenten besetzten Werkzeugs vor einer ersten Inbetriebnahme des Schneidsegmentes nunmehr entfällt. Weiterhin wird eine hohe Schnittgeschwindigkeit ermöglicht, da nur ein definierter kleiner Teil in den zu bearbeitenden Werkstoff eindringt.

Die vorteilhaften Wirkungen der treppenförmigen Anordnung der Flächenabschnitte sind besonders ausgeprägt, wenn die Flächenabschnitte in parallel zueinander liegenden Ebenen verlaufen.

Günstig kann es ebenfalls sein, wenn die Flächenabschnitte senkrecht zu einer Längsrichtung des Schneidsegmentes, stufenförmig versetzt angeordnet sind, d. h. wenn sie senkrecht zu einer Arbeitsrichtung stufenförmig versetzt zueinander sind. Hierdurch werden Treppenabschnitte erzeugt, die sich in Arbeitsrichtung des Schneidsegmentes im Wesentlichen über dessen gesamte Länge erstrecken. Auch hier ergeben sich die Vorteile, dass das ansonsten übliche Anschärfen eines mit Schneidsegmenten besetzten Werkzeugs vor einer ersten Inbetriebnahme des Schneidsegmentes entfällt, und dass eine hohe Schnittgeschwindigkeit ermöglicht wird, da nur ein definierter kleiner Teil in den zu bearbeitenden Werkstoff eindringt.

In einer vorteilhaften Variante der Erfindung sind zwei benachbarte Flächenabschnitte in einem Winkel α > 0° zueinander angeordnet. Durch diese Massnahme wird eine Quasi-Keilform der Schneidfläche erzeugt, die eine hohe Schnittgeschwindigkeit ermöglicht. Durch die ebenfalls vorhandene stufenförmige Anordnung der Flächenabschnitte der Schneidfläche kann aber zusätzlich erreicht werden, dass die Quasi-Keilform über die Lebensdauer des Schneidsegmentes erhalten bleibt. Als besonders günstig hat sich dabei ein Winkel α zwischen 10° und 50 ° herausgestellt.

Ein einfach herstellbares Schneidsegment ergibt sich, wenn die Stufenhöhe bzw. der Versatz von einem Flächenabschnitt zum nächsten Flächenabschnitt zwischen 0,1 und 5 mm beträgt. Besonders vorteilhaft beträgt diese Stufenhöhe zwischen 0,3 und 1 mm.

Eine vorteilhafte Symmetrie, insbesondere bei ringförmigen Schneidsegmenten, wird erreicht, wenn die Flächenabschnitte zur Basis geneigt sind, wobei die Neigungswinkel der Flächenabschnitte zur Basis jeweils identisch sind.

Weitere Vorteile und Massnahmen der Erfindung ergeben sich aus den Unteransprüchen, der nachfolgenden Beschreibung und den Zeichnungen. In den Zeichnungen ist die Erfindung in mehreren Ausführungsbeispielen dargestellt.

Es zeigen:
- Fig. 1: ein erfindungsgemässes Schneidsegment in perspektivischer Ansicht,
- Fig. 2: das Schneidsegment aus Fig. 1 gesehen in Richtung II in Seitenansicht,
- Fig. 3: das Schneidsegment aus Fig. 1 in Ansicht aus Richtung III von oben auf die Schneidfläche,
- Fig. 4: eine Kernbohrkrone mit Schneidsegmenten gemäss Fig. 1 in Aufsicht gesehen aus Richtung IV,
- Fig. 5: ein Kreissägeblatt in Perspektive mit Schneidsegmenten im Ausschnitt,
- Fig. 6: ein weiteres Schneidsegment in Seitenansicht,
- Fig. 7: ein weiteres Schneidsegment in Stirnansicht, gesehen in Richtung VII auf Fig. 8,
- Fig. 8: das Schneidsegment aus Fig. 7 in perspektivischer Ansicht.
- Fig. 9: ein weiteres Schneidsegment in perspektivischer Ansicht.

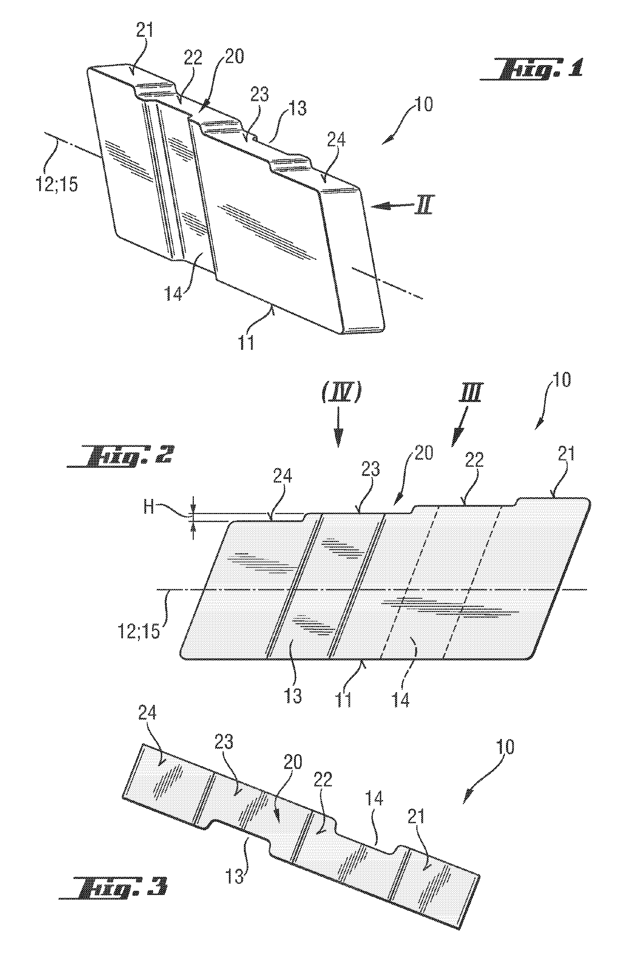

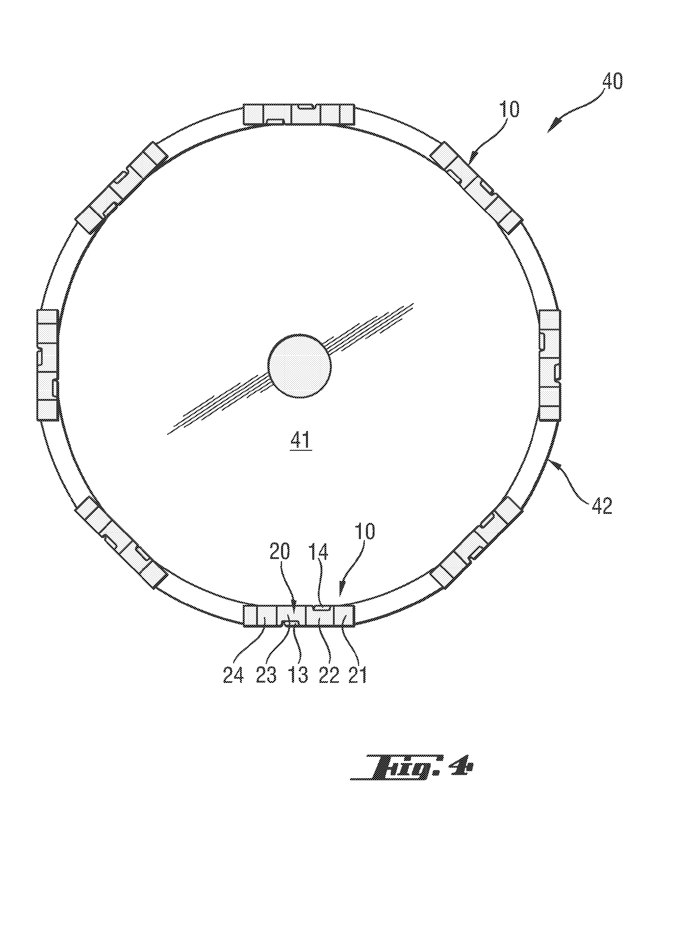

Das in den Figuren 1 bis 3 dargestellte Schneidsegment 10 für Werkzeuge, wie Bohrkronen, Sägeblätter, Trennscheiben, weist eine Basis 11 zum Anbringen des Schneidsegmentes 10 an ein Werkzeug auf. Das Schneidsegment 10 weist ferner eine, von der Basis 11 abgewandte Schneidfläche 20 auf. Vorzugsweise ist das Schneidsegment 10 als Verbundkörper gefertigt, der in einer Matrix eingelagerte Schneidpartikel, wie z. B. Diamanten oder ähnlich harte oder härtere Minerale, aufweist. Das Schneidsegment 10 weist eine längliche Form auf, die eine Längsachse 12 definiert. Entlang der Längsachse 12 bzw. in Erstreckungsrichtung 15 des Schneidsegmentes 10 weist die Schneidfläche 20 mehrere stufen- bzw. treppenartig angeordnete Flächenabschnitte 21, 22, 23, 24 auf, die in parallel zueinander angeordneten Ebenen verlaufen. Die Flächenabschnitte 21, 22, 23, 24 verlaufen ebenfalls zur Basis 11 parallel. Die Flächenabschnitte 21, 22, 23, 24 sind jeweils zueinander höhenmässig versetzt angeordnet, wobei die Höhe H einer derartigen Stufe zwischen 0, 1 und 5 mm, vorzugsweise zwischen 0,3 und 1 mm, liegt.
In die Seitenflächen des erfindungsgemässen Schneidsegmentes 10 ist ferner jeweils noch eine Nut 13, 14 eingelassen, die beide dem besseren Abführen von Bohrmehl bzw. Bohrschlamm oder der Wasserzufuhr dienen.

In Fig. 4 ist ein Werkzeug 40 in Form einer Kernbohrkrone wiedergegeben. An einer Schneidkante 42, die einen topfförmigen Aufnahmeraum 41 umgibt, sind mehrere erfindungsgemässe Schneidsegmente 10 angeordnet.

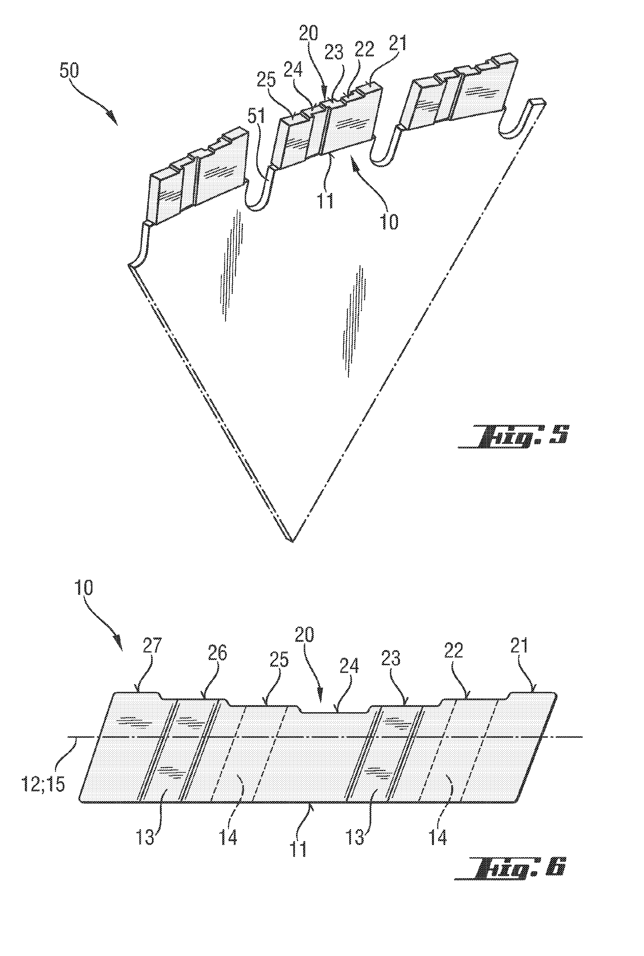

In Fig. 5 ist ein weiteres Werkzeug 50 in Form eines Kreissägeblattes wiedergegeben. An jedem Sägezahn 51 ist dort jeweils ein Schneidsegment 10 an seiner Basis 11 festgelegt. Die Festlegung kann dabei z. B. durch Kleben, Löten oder Schweissen erfolgen. Abweichend zu den Schneidsegmenten, gemäss den Figuren 1 bis 4, weisen die hier dargestellten Schneidsegmente 10 eine Schneidfläche 20 auf, die fünf treppenförmig angeordnete Flächenabschnitte 21, 22, 23, 24, 25 aufweist.

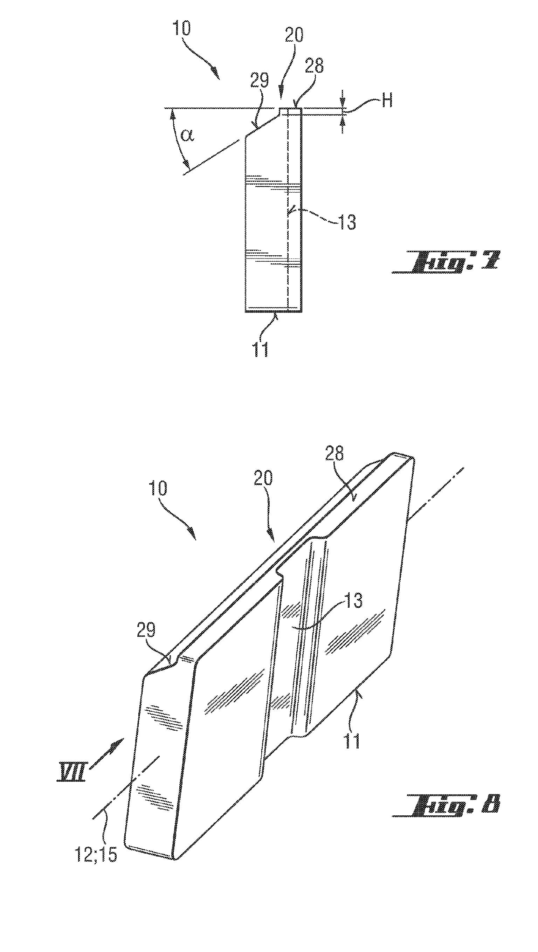

In Fig. 6 ist eine weitere Variante eines Schneidsegmentes 10 dargestellt. Dieses weist abweichend von den zuvor beschriebenen Schneidsegmenten 10 eine Schneidfläche 20 auf, die sieben Flächenabschnitte 21, 22, 23, 24, 25, 26, 27 umfasst, die ausgehend von einem zentralen Flächenabschnitt 24 entlang der Längsachse 12 bzw. in Erstreckungsrichtung 15 des Schneidsegmentes 10 zu zwei Seiten hin treppenförmig ansteigen. Ferner weist das Schneidsegment 10 an jeder Seite jeweils zwei Nuten 13, 14 auf, die von der Basis 11 zur Schneidfläche 20 hin leicht schräg verlaufen. Das Schneidsegment 20 an sich ist ebenfalls leicht in Richtung der bevorzugten Arbeitsrichtung geneigt.

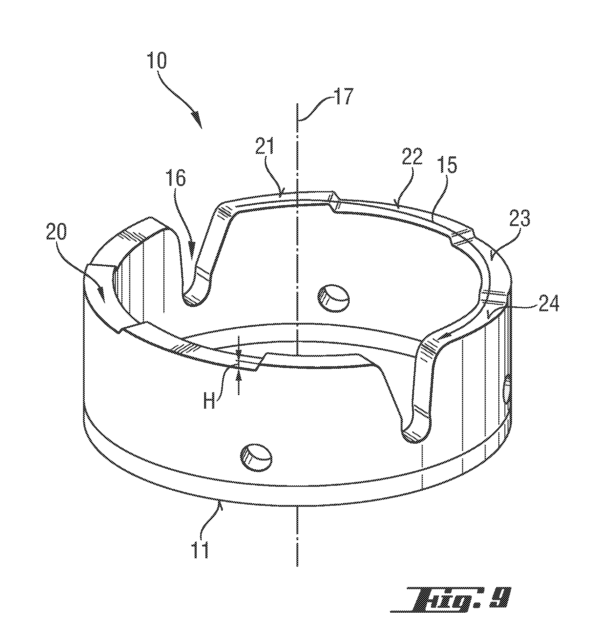

Das in den Figuren 7 und 8 dargestellte Schneidsegment 10 weist eine Schneidfläche 20 auf, die zwei stufenförmig zueinander angeordnete Flächenabschnitte 28, 29 aufweist. Beide Flächenabschnitte 28, 29 verlaufen dabei parallel zur Längsachse 12 bzw. in Erstreckungsrichtung 15 des Schneidsegmentes 10 über dessen gesamte Länge. Der Flächenabschnitt 28 verläuft im Wesentlichen parallel zur Basis 11 des Schneidsegmentes 10. Der Flächenabschnitt 29 hingegen ist in einem Winkel α zu dem Flächenabschnitt 28 geneigt, der vorzugsweise zwischen 10° und 50° liegt. Beide Flächenabschnitte 28, 29 ergeben daher eine Quasi-Keilform der Schneidfläche 20. Das Schneidsegment 10 weist ferner noch eine Nut 13 an einer Seite auf. Die Stufenhöhe H liegt hier ebenfalls wieder im Bereich von 0,1 bis 5 mm, vorzugsweise im Bereich von 0,3 bis 1 mm.

Das in Figur 9 dargestellte Schneidsegment 10 ist ringförmig ausgebildet und weist eine Schneidfläche 20 auf, die durch zwei Schlitze 16 zweigeteilt ist. Die Schneidfläche 20 weist Flächenabschnitte 21, 22, 23, 24 auf, die in einer der Ringform folgenden Erstreckungsrichtung 15 des Schneidsegments 10 treppenförmig hintereinander liegend angeordnet sind. Die Stufenhöhe H zwischen den einzelnen Flächenabschnitten 21, 22, 23, 24 liegt auch hier wieder im Bereich von 0,1 bis 5 mm, vorzugsweise im Bereich von 0,3 bis 1 mm. Die Flächenabschnitte 21, 22, 23, 24 sind ferner zu der Basis 11 geneigt, wobei die Neigungswinkel der Flächenabschnitte 21, 22, 23, 24 zur Basis 11 identisch sind. Die Flächenabschnitte 21, 22, 23, 24 sind jeweils zweimal am Schneidsegment 10 vorhanden, wo sie entlang einer 2-zähligen Drehungsachse rotationssymmetrisch angeordnet sind. Die 2-zählige Drehungsachse fällt dabei mit der Rotationsachse 17 des Schneidsegments 10 zusammen.

## Patentansprüche

1. Schneidsegment für Werkzeuge, wie Bohrkronen, Sägeblätter, Trennscheiben, mit einer Basis (11) zum Anbringen des Schneidsegmentes (10) an ein Werkzeug (40, 50) und mit einer, der Basis (11) gegenüberliegenden Schneidfläche (20),
**dadurch gekennzeichnet,**
**dass** die Schneidfläche (20) wenigstens zwei Flächenabschnitte (21, 22, 23, 24, 25, 26, 27, 28, 29) ausbildet, die stufenförmig zueinander versetzt sind.

2. Schneidsegment nach Anspruch 1, **dadurch gekennzeichnet, dass** die Schneidfläche (20) mehrere Flächenabschnitte (21, 22, 23, 24, 25, 26, 27) aufweist die in einer Erstreckungsrichtung (15) des Schneidsegmentes (20) treppenartig versetzt hintereinander liegend angeordnet sind.

3. Schneidsegment nach Anspruch 1 oder 2, **dadurch gekennzeichnet, dass** die Schneidfläche (20) mehrere Flächenabschnitte (21, 22, 23, 24, 25, 26, 27) aufweist die entlang einer Längsachse (12) des Schneidsegmentes (20) treppenartig versetzt angeordnet sind.

4. Schneidsegment nach einem der Ansprüche 1 bis 3, **dadurch gekennzeichnet, dass** die Flächenabschnitte (21, 22, 23, 24, 25, 26, 27) in parallel zueinander liegenden Ebenen verlaufen.

5. Schneidsegment nach einem der Ansprüche 1 bis 4, **dadurch gekennzeichnet, dass** die Flächenabschnitte (28, 29) senkrecht zu der Längsachse (12) des Schneidsegmentes (10), stufenförmig versetzt angeordnet sind.

6. Schneidsegment nach Anspruch 1 oder 5, **dadurch gekennzeichnet, dass** zwei benachbarte Flächenabschnitte (28, 29) in einem Winkel α > 0° zueinander angeordnet sind.

7. Schneidsegment nach Anspruch 6, **dadurch gekennzeichnet, dass** der Winkel α zwischen 10° und 50 ° beträgt.

8. Schneidsegment nach einem der Ansprüche 1 bis 7, **dadurch gekennzeichnet, dass** die Stufenhöhe H von einem Flächenabschnitt (21, 22, 23, 24, 25, 26, 27, 28, 29) zum nächsten Flächenabschnitt (21, 22, 23, 24, 25, 26, 27, 28, 29) zwischen 0,1 und 5 mm beträgt.

9. Schneidsegment nach Anspruch 8, **dadurch gekennzeichnet, dass** die Stufenhöhe (H) zwischen 0,3 und 1 mm beträgt.

10. Schneidsegment nach einem der Ansprüche 1 bis 4, **dadurch gekennzeichnet, dass** die Flächenabschnitte (21, 22, 23, 24) zur Basis (11) geneigt sind, wobei die Neigungswinkel der Flächenabschnitte (21, 22, 23, 24) zur Basis (11) jeweils identisch sind.
